# EUROPÄISCHE PATENTSCHRIFT

(11) **EP 0 340 400 B1**
(45) Veröffentlichungstag und Bekanntmachung des Hinweises auf die Patenterteilung: **27.01.1993**
(21) Anmeldenummer: 89103214.6
(22) Anmeldetag: 23.02.1989
(51) Int. Cl.: F41F 3/06

(54) **Vorrichtung zum Aufhängen, Abpratzen und Starten von Flugkörpern**
Assembly for suspending, lowering and starting missiles
Dispositif pour suspendre, abaisser et lancer des missiles

(30) Priorität: 03.05.1988 DE 3815022
(43) Veröffentlichungstag der Anmeldung: 08.11.1989
(73) Patentinhaber: Deutsche Aerospace AG, 81663 München (DE)
(72) Erfinder: Bartl, Josef, D-8201 Biberg (DE); Schröttle, Wilhelm, D-8000 München 83 (DE); Puttinger, Dietmar, D-8000 München 22 (DE)

(56) Entgegenhaltungen:
- EP-A- 0 136 917
- GB-A- 2 166 526

## Beschreibung

Die Erfindung bezieht sich auf eine Vorrichtung zum Aufhängen, Abpratzen und Starten von Flugkörpern entsprechend dem Oberbegriff des Anspruches 1.

Bei bekannten derartigen Vorrichtungen wird das Abpratzen des Flugkörpers auf der Startschiene mit einem Keil vorgenommen. Dabei besteht die Gefahr, daß sich der Keil bei dynamischer Belastung festfrißt und sich nur schwer wieder lösen läßt. Die Keilkräfte wirken dabei hemmend auf den Abgang des Flugkörpers und lassen sich nur äußerst schwer überwinden. Bei Vorrichtungen mit direkt von oben wirkender Verriegelung müssen sowohl die Kräfte zum Abpratzen als auch die Kräfte zum Lösen der Verriegelung sehr hoch sein.

Die Aufgabe der Erfindung besteht darin, eine Vorrichtung der eingangs genannten Art zu schaffen, mit der sowohl das Abpratzen des Flugkörpers auf der Startschiene als auch das Lösen der Abpratzung mit verhältnismäßig geringen Kräften und sicher durchführbar ist. Die Lösung dieser Aufgabe erfolgt erfindungsgemäß mit den kennzeichnenden Merkmalen des Anspruches 1. Vorteilhafte Weiterbildungen der Erfindung sind in den Unteransprüchen wiedergegeben.

Der wesentlichste Vorteil der Erfindung ist, daß die Abpratzkraft mit Hilfe des federvorbelasteten Kniehebelsystems auf die Abpratzbrücke aufgebracht wird. Das Lösen des Kniehebelsystems mit der magnetbetätigten Klinke ist einfach zu handhaben und ausfallsicher. Nach dem Lösen des Abpratzens wirkt keine Reibkraft, hervorgerufen durch die Startkkinematik, hemmend auf den Flugkörper.

Die einstellbare Rückhalteeinrichtung bewirkt ein sicheres Zurückhalten des Flugkörpers bis zum Start, wobei durch den Startschub sicher die Rückhaltekräfte überwunden werden und dabei durch einfache mechanische Hebelübersetzungen Halteklinken und Zündverbindungen weggeschwenkt werden.

Ein Ausführungsbeispiel der Erfindung ist in der Zeichnung dargestellt und im folgenden näher beschrieben. Es zeigen
Fig. 1 eine Vorrichtung zum Aufhängen und Abpratzen von Flugkörpern in der Seitenansicht bei aufgeschnittenem Gehäuse;
Fig. 2 einen Schnitt entsprechend den Linien II-II der Fig. 1 zur Darstellung der Auflage des Flugkörpers auf einer Startschiene;
Fig. 3 eine teilweise Draufsicht auf die Vorrichtung nach Fig. 1 ohne Gehäuseoberteil;
Fig. 4 ein Teilschnitt durch die Vorrichtung nach Fig. 1 entsprechend den Linien IV-IV;
Fig. 5 eine Darstellung der Bauteile, welche die Sicherungsstellung der Abpratzfunktion bewerkstelligen;
Fig. 6 die Bauteile nach Fig. 5 bei aufgehobener Abpratzung;
Fig. 7 eine Darstellung der Bauteile, welche nach aufgehobener Abpratzung den Flugkörper zurückhalten;
Fig. 8 eine Darstellung derjenigen Bauteile, die für das Zurückhalten des Flugkörpers mit einer Sicherungsklinke und für das Ausklinken erforderlich sind;
Fig. 9 die Bauteile nach Fig. 8 nach dem Herausheben der Sicherungsklinke aus dem Flugkörper und
Fig. 10 eine Darstellung der Bauteile, welche das Herausheben von Zündkontakten aus dem Flugkörper bewerkstelligt haben.

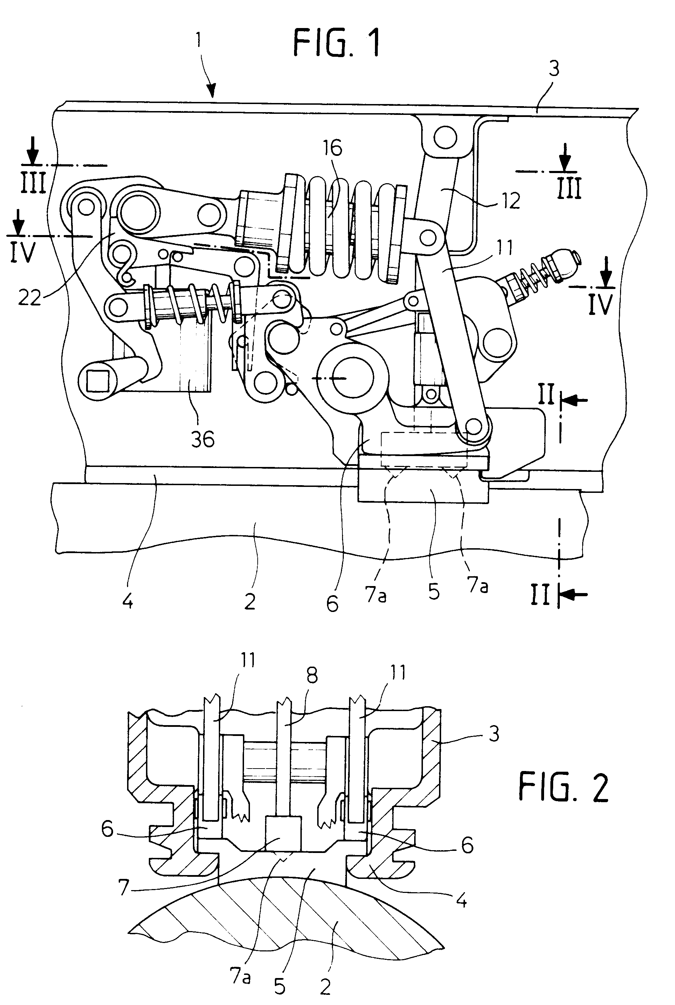

In der Fig. 1 ist eine Vorrichtung 1 zum Aufhängen und Abpratzen eines Flugkörpers 2 in der Seitenansicht dargestellt, wobei das Vorderteil eines die Vorrichtung aufnehmenden Gehäuses 3 weggelassen ist. Am Unterteil des Gehäuses 3 ist eine Startschiene 4 angeordnet, auf der der Flugkörper 2 vor dem Start aufliegt und von der der Flugkörper 2 aus startet.

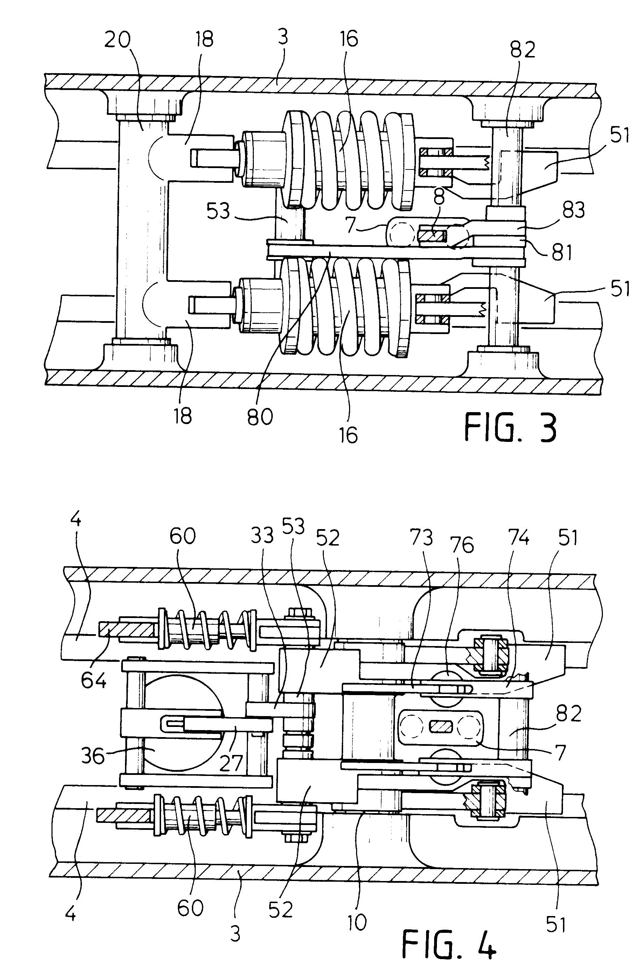

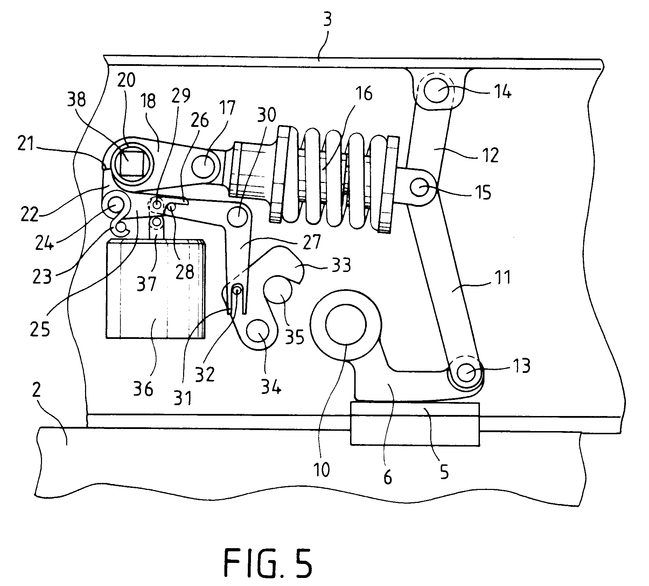

Aus der Fig. 2 ist ersichtlich, wie der Flugkörper 2 mit einem T-Hänger 5 auf der Innenseite der Startschiene 4 aufliegt. Der T-Hänger 5 wird durch eine zweiteilige Abpratzbrücke 6 über durch zwei Federanordnungen 16 in ihrer Lage gehaltene Kniehebel 11 und 12 auf die Schiene 4 gepreßt (siehe Fig. 1). In die Mitte des T-Hängers 5 ist ein Zündergehäuse 7 aufgesetzt, in dem Zündkontakte 7a zum Anzünden eines Flugkörpertriebwerkes angeordnet sind. Weiterhin ist eine Hebestange 8 ersichtlich, mit dem, wie weiter unten beschrieben wird, das Zündergehäuse 7 nach dem Anzünden des Triebwerkes hochgehoben werden kann. Alle übrigen Teile der Vorrichtung 1, ebenso wie die aus den Fig. 3 und 4 außerdem ersichtlichen Teile, werden bei der Beschreibung der einzelnen Funktionen der Vorrichtung anhand der Fig. 5 bis 10 näher erläutert.

Die Fig. 3 stellt eine Ansicht von oben auf die Vorrichtung 1 entsprechend den Linien III-III der Fig. 1 dar und die Fig. 4 zeigt einen Schnitt durch die Vorrichtung entpsrechend den Linien IV-IV der Fig. 1. In beiden Fig. 3 und 4 sind der Übersichtlichkeit halber jeweils einige der später in den Fig. 5 bis 10 im einzelnen erläuterten Teile weggelassen.

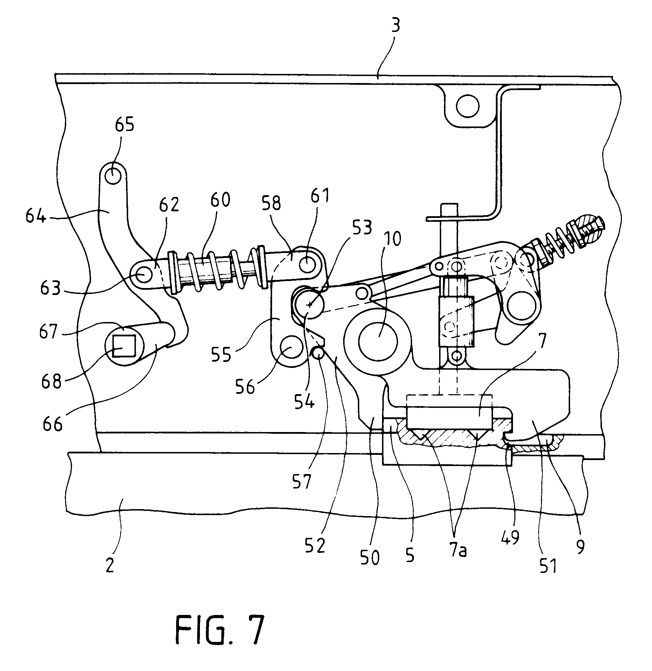

In den nachfolgend beschriebenen Fig. 5 bis 10 ist die Startschiene 4 der Übersichtlichkeit halber fortgelassen. Es sind im wesentlichen nur die Bauteile dargestellt, die zur jeweils zu erläuternden Funktion erforderlich sind. In der Fig. 5 sind die Teile dargestellt, die zum Abpratzen des Flugkörpers 2 auf der Startschiene 4 erforderlich sind, wobei diese Funktion in der gesicherten Stellung gezeigt ist. Die Anordnung entspricht somit der Fig. 1. Die Abpratzbrücke 6, die auf einer Welle 10 in nicht dargestellter Weise am Gehäuse 3 gelagert ist und die wie aus den Fig. 2 und 4 ersichtlich, zweiteilig ausgeführt ist, werden auf den T-Hänger 5 des Flugkörpers 2 durch Kniehebel mit Hebelstangen 11 und 12 gedrückt. Die Hebelstange 11 ist an der Abpratzbrücke 6 in Punkten 13 und die Hebelstange 12 am Gehäuse 3 in Punkten 14 angelenkt. An gemeinsamen Anlenkpunkten 15 sind die Hebelstangen 11 und 12 mit Federanordnung 16 verbunden, die ebenfalls entsprechend Fig. 3 in doppelter Ausführung vorhanden sind und, die in bekannter Weise mit einer Schraubenfeder und einer Teleskopführung versehen sind. Jede der beiden Federanordnungen 16 sind an Anlenkpunkten 17 mit einarmigen Hebeln 18 verbunden, die gemeinsam auf einer Welle 20 im Gehäuse 3 gelagert sind. Die Hebel 18 weisen eine Ausfräsung mit Kante 21 auf, in die je eine Klinke 22 eingerastet ist Die Klinken 22 sind dabei durch Drehfedern 23, die um eine Drehwelle 24 für die Klinken 22 herumnführen, in ihrer Lage gehalten. Während selbstverständlich zwei Klinken 22 zum Einrasten in die beiden Hebel 20 vorhanden sind, ist auf ihrer Verbindungswelle 24 in der Mitte ein weiterer Hebel 25 angeordnet, dar in eine gabelförmigen Nase 26 ausläuft, zwischen denen ein doppelarmiger Hebel 27 geführt ist, der mit Mitnehmerstiften 28 versehen ist, auf denen die Nase 26 aufliegt (siehe auch Fig. 4). Der Hebel 27 ist in der Mitte auf einer Achse 30 gelagert, ist an einem Ende an einem Drehpunkt 29 mit dem Hebel 25 verbunden und auf seinem anderen Ende mit einer Gabel 31 versehen, die einen Stift 32 umfaßt, der auf einem einarmigen Sicherungshebel 33 angeordnet ist. Der Sicherungshebel 33 ist auf einer Welle 34 gelagert und umfaßt in einer Ausnehmung eine Welle 35, die zu einem Rückhaltesystem gehört, welches anhand der Fig. 7 bis 10 beschrieben wird. Weiterhin ist noch ein Umkehrmagnet 36 mit einer Schubstange 37 dargestellt, die am oberen Ende mit dem Drehpunkt 29 gelenkig verbunden ist. Nach Beladen der Vorrichtung 1 mit dem Flugkörper 2 wird das in der Fig. 5 dargestellte Abpratzen, das heißt das Durchdrücken der Kniehebel mit den Stangen 11 und 12 dadurch bewerkstelligt, daß von außen mit einem in die Welle 20 gesteckten Vierkant 38 der Hebel 18 herumgedreht und die Federanordnungen 16 zusammengedrückt werden.

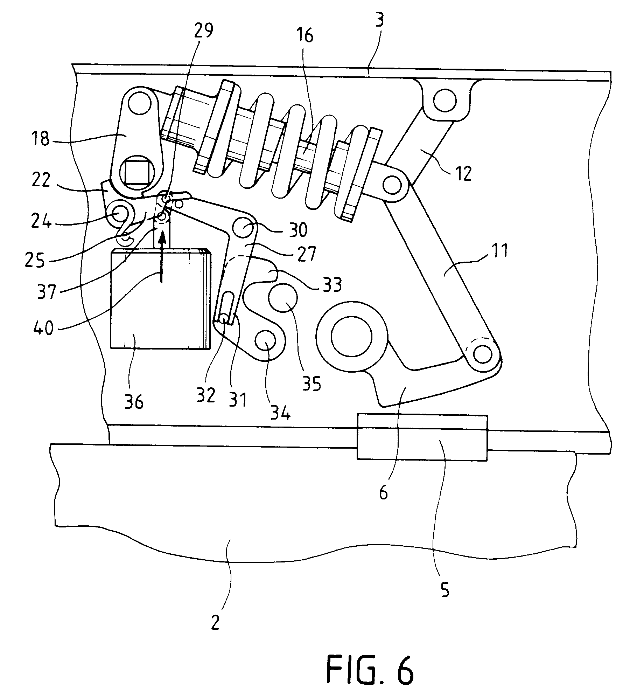

In der Fig. 6 ist das Lösen der Abpratzfunktion dargestellt. Dazu ist vom Umkehrmagneten 36 die Schubstange 37 in Richtung eines Pfeiles 40 betätigt. Es werden dabei die Hebel 25 und 27, die mit der Schubstange 37 am Drehpunkt 29 gelenkig verbunden sind, angehoben und um ihre Drehpunkte 24 und 30 gedreht. Das Drehen des Hebels 25 bewirkt entsprechend Fig. 5, daß sich die Klinke 22 aus dem Ansatz 21 des Hebels 18 löst. Letzterer wird durch die Kraft der Federanordnung 16 entgegen dem Uhrzeigersinn gedreht und gelangt dadurch in die in der Fig. 6 dargestellten Stellung, wobei die Klinke 22 außen am Hebel 18 anliegt. Durch Drehen des Hebels 27 wird auch der Sicherungshebel 33 um seine Welle 34 gedreht, weil sein Stift 32 durch die Gabel 31 mitgenommen wird und sich zuletzt in dargestellter Weise am Ende der Gabel 31 befindet. Der Sicherungshebel 33 hat dadurch die Welle 35 freigegeben. Die Schubstange 37 des Magneten 36 wird nach dem Start des Flugkörpers 2 auf die in Fig. 5 dargestellte Ausgangsstellung zurückgezogen. Die Abpratzbrücke 6 ist somit vom T-Hänger 5 des Flugkörpers 2 abgehoben, so daß dieser auf der Startschiene 4 frei aufliegt. Die in Fig. 6 dargestellten Teile der Vorrichtung 1 entsprechen auch dem Beladungszustand des Flugkörpers vor der Sicherung.

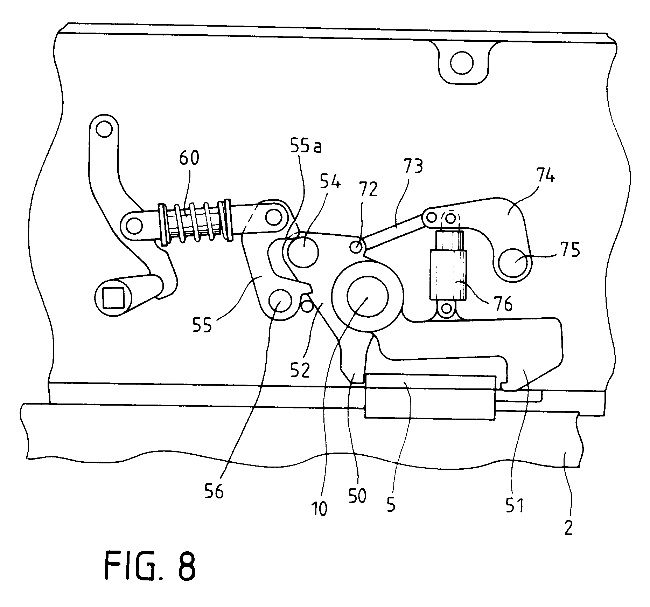

Die Fig. 7 stellt die Teile dar, die für die Rückhaltefunktion des Flugkörpers 2, nach dem die Abpratzung aufgehoben und der Sicherungshebel 33 gelöst worden ist, erforderlich sind. Die gleichen Teile sind auch notwendig, um den Flugkörper 2 für den Start ganz freizugeben, nach dem das Triebwerk gezündet und Schub aufgebaut ist. Die Rückhaltung, auch gegen den ersten Anfangsschub, erfolgt durch Halteklinken 50 und Greifklinken 51, die sich um die Welle 10, an der auch die Abpratzbrücken 6 gelagert sind, drehen können. Wie die Fig. 4 zeigt, liegen jeweils zwei Halteklinken 50 und zwei Greifklinken 51 an dem T-Hänger 5 des Flugkörpers 2 an, wobei die Greifklinken 51 über eine in der Startschiene 4 vorhandene Aussparung 9 in eine Nut 49 des T-Hängers 5 eingreifen. Die Halteklinken 50 sind Teile von Hebeln 52, in die auf einer Achse 53 drehbare Rollen 54 eingesetzt sind. Die Rollen 53 greifen in die Kurvenbahnen 55a von Gleithebeln 55, die um Wellen 56 drehbar sind und an Raststiften 57 anliegen. Am oberen Teil der Gleithebel 55 sind Gabeln 58 von Rückhalte-Federanordnungen 60 in Bolzen 61 gelagert. Die Rückhalte-Federanordnungen 60 sind andererseits ebenfalls mit einer Gabel 62 mit Bolzen 63 an Hebeln 64 angelenkt, die an Punkten 65 gelagert sind. Die Hebel 64 sind für ihre Funktion begrenzt schwenkbar. Exenterhebel 66, die um Wellen 67 gelagert sind, drücken mit ihren Enden in unten an den Hebeln 64 angebrachte Rundungen. Mit Hilfe von in der Welle 67 angebrachte Vierkante 68 können die Rückhalte-Federanordnungen 60 gespannt und entsprechend der gefordeten Rückhaltekraft eingestellt werden. Weiterhin ist in der Fig. 7 noch das in den T-Hänger 5 hineinreichende Zündergehäuse 7 mit den Zündkontakten 7a für die Anzündung des Triebwerkes dargestellt. Die Funktionen zum Anheben der Halteklinken 50 und Greifklinken 51 sowie zum Anheben des Zündergehäuses 7 sind in den Fig. 8 bis 10 erläutert.

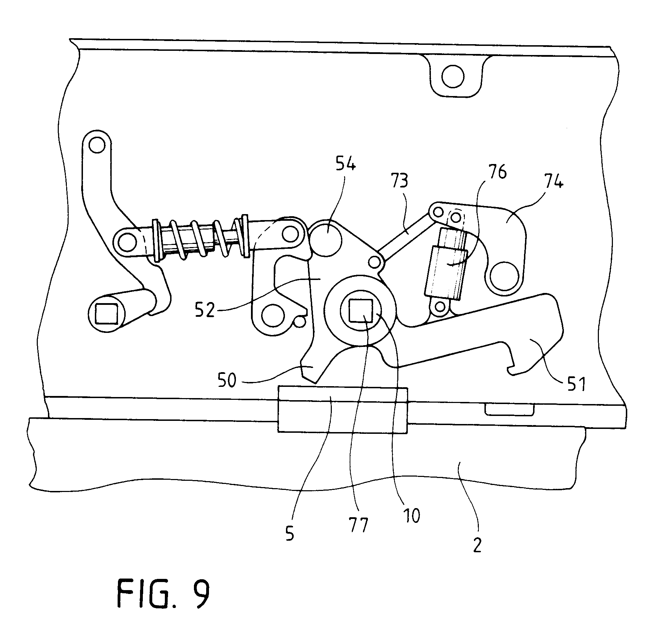

In den Fig. 8 und 9 sind von den in der Fig. 7 dargestellten Teile nur diejenigen vorhanden, die zum Anheben der Halteklinken 50 und Greifklinken 51 erforderlich sind.

Bei der Fig. 8 hat das Triebwerk des Flugkörpers 2 bereits soviel Schub entwickelt, daß der T-Hänger 5 gegen die Halteklinken 50 drückt. Dabei drehen sich die Hebel 52 um die Achse 10 im Uhrzeigersinn und die Rollen 54 beginnen sich auf Kurvenbahnen 55a der Gleithebel 55 abzurollen, wobei letztere um ihren Drehpunkt 56 nach links schwenken und dabei die Rückhalte-Federanordnungen 60 zusammendrücken. Die Hebel 52 haben Anlenkaugen 72, die über Stäbe 73 mit einarmigen Hebeln 74 in Verbindung stehen. Durch die Rechtsdrehung der Hebel 52 werden somit die Hebel 74 um ihren Drehpunkt 75 ebenfalls rechts herum gedreht. Dabei werden die an den Hebeln 74 angelenkten Federpuffer 76, die bei der Sicherungsstellung und bei der Rückhaltefunktion die Greifklinken 51 nach unten drücken, nach oben gezogen, wobei sie die Greifklinken 51 anheben. In der Darstellung der Fig. 9 hat der Flugkörper 2 mit seinem T-Hänger 5 die Halteklinken 50 bereits vollkommen weggedrückt, so daß ein ungehinderter Start durchführbar ist. Hierbei sind die Rollen 54 auf den Kur venbahnen 55a bei weiterer Rechtsdrehung der Hebel 52 weiter abgerollt. Als Folge davon sind die Greifklinken 51 über die Stäbe 73, die Hebel 74 und Federpuffer 76 bis zur dargestellten Stellung angehoben. In der Welle 10 ist ein Vierkant 77 eingearbeitet, mit dem nach Beladen eines weiteren Flugkörpers die Rückhaltung der Bauteile entsprechend der Darstellung in Fig. 7 vorgenommen werden kann.

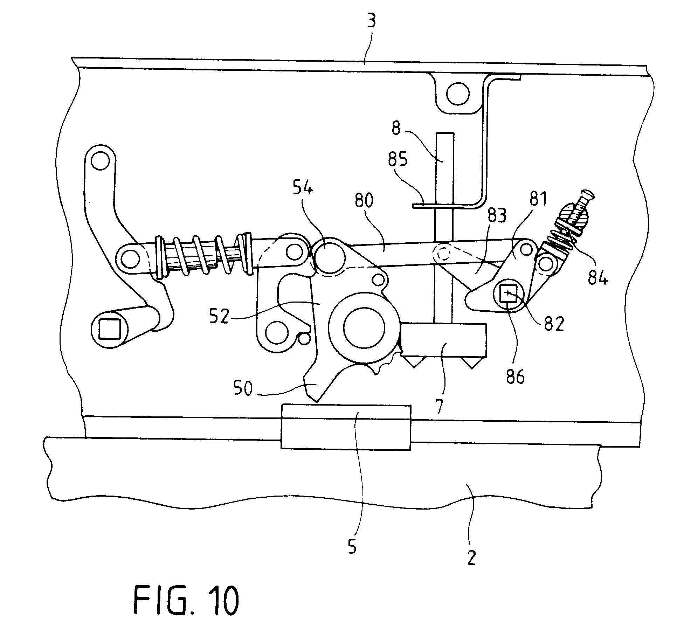

Die Fig. 10 zeigt dieselbe Situation beim Startvorgang des Flugkörpers 2 wie Fig. 9. Durch Anheben der Halteklinken 50 mit dem T-Hänger 5 sind die Hebel 52 in ihre Endstellung gelangt. Zwischen den Hebeln 52 ist auf der Achse 54 ein Stab 80 angelenkt, der am anderen Ende zwischen den Gabeln eines Doppelhebels 81 angelenkt ist, der um eine Achse 82 dreht. Auf der Achse 82 ist weiterhin ein zweiarmiger Hebel 83 befestigt, an dessen einem Hebelarm die bereits in Fig. 2 dargestellte Hebestange 8 für das Zündergehäuse 7 angelenkt ist und dessen anderer Hebelarm mit einer Federanordnung 84 verbunden ist. Die Hebestange 8 ist weiterhin noch in einem am Gehäuse 3 befestigten Winkelblech 85 geführt. In der dargestellten Stellung ist das Zündergehäuse 7 aus dem Flugkörper 2 herausgehoben und die Federanordnung 84 über einen Totpunkt geschwenkt, wodurch die Endstellung fixiert ist. Die Rückhaltestellung der dargestellten Teile im ruhenden Flugkörper 2 ist der Fig. 7 zu entnehmen. In der Achse 82 ist ein Vierkant 86 vorhanden, mit dem das Zündergehäuse 7 in einem niedergelassenen Flugkörper abgesenkt werden kann.

## Patentansprüche

1. Vorrichtung zum Aufhängen, Abpratzen und Starten von Flugkörpern mit einem unter einem Flugzeug angebrachten Gehäuse (3) mit einer Startschiene (4), von der der Flugkörper (2) mit eigenem Schub startet, **dadurch gekennzeichnet,** daß das Abpratzen des Flugkörpers (2) auf die Startschiene (4) mit zwei Abpratzbrücken (6) erfolgt, deren Kraft mit durch zwei Federanordnungen (16) in ihrer Lage gehaltenen Kniehebeln (11, 12) aufgebracht ist, daß die Federanordnungen in ihrer Lage durch Klinken (22) gesichert sind und daß das Lösen der Kniehebel durch einen auf die Klinken einwirkenden Umkehrmagneten (36) erfolgt, wobei gleichzeitig eine Rückhaltefunktion, die den Flugkörper bis zu seinem Start in seine Lage hält, entsichert wird.

2. Vorrichtung nach Anspruch 1, **dadurch gekennzeichnet,** daß die Federanordnungen (16) auf einer Seite mit Drehpunkten (15) der Kniehebel (11, 12) und auf der anderen Seite gelenkig mit einarmigen Hebeln (18) verbunden sind, an deren Lagerwellen (20) außen Ansätze (21) vorhanden sind, in die die Klinken (22) einrasten.

3. Vorrichtung nach den Ansprüchen 1 und 2, **dadurch gekennzeichnet,** daß der Umkehrmagnet (36) beim Ausfahren einer Schubstange (37) über einen Drehpunkt (29) gleichzeitig auf zwei doppelarmige Hebel einwirkt, von denen der erste Hebel (25) mit seinem anderen Ende über eine Welle (24) die Klinken (22) von den Hebeln (18) abhebt, wodurch die Federanordnungen (16) sich entspannen, die Kniehebel (11, 12) einknicken und die Abpratzbrücken (6) vom Flugkörper (2) abheben, und der zweite Hebel (27) mit seinem anderen Ende über eine Gabel (31) und einen Mitnehmerstift (32) einen Sicherungshebel (33) von einer Welle (35) abhebt, wodurch die Rückhaltefunktion freigegeben ist.

4. Vorrichtung nach Anspruch 3, **dadurch gekennzeichnet,** daß die Rückhaltefunktion die Lagesicherung des Flugkörpers (2) bis zu seinem Start durch zwei Halteklinken (50) und zwei Greifklinken (51), die einen oben am Flugkörper angeordneten T-Hänger (5) beidseitig blockieren, bewirkt, und daß die Rückhaltefunktion die ordnungsgemäße Anzündung des Flugkörpertriebwerkes durch ein in den T-Hänger (5) abgesenktes Zündergehäuse (7) mit Zündkontakten (9) gewährleistet.

5. Vorrichtung nach Anspruch 4, **dadurch gekennzeichnet,** daß die Halteklinken (50) und Greifklinken (51) einen gemeinsamen Drehpunkt (10) mit Hebeln (52) haben, die seitlich mit Rollen (54) versehen sind, die in Kurvenbahnen (55a) von Gleithebeln (55) eingreifen und darauf abrollen können, und daß die Gleithebel (55) mit Rückhalte-Federanordnungen (60) verbunden sind, die zur Rückhaltefunktion die Greifklinken (51) über den T-Hänger (5) an die Halteklinken (50) anpressen.

6. Vorrichtung nach den Ansprüchen 4 und 5, **dadurch gekennzeichnet,** daß die Greifklinken (51) zusätzlich von oben durch Federpuffer (76), die über Hebel (74) und Stäbe (73) mit den Hebeln (52) verbunden sind, in eine Nut (49) des T-Hängers (51) gedrückt sind.

7. Vorrichtung nach den Ansprüchen 4 und 5, **dadurch gekennzeichnet,** daß die Rückehaltekraft der Greifklinken (51) durch einarmige Hebel (64), an deren unteren Enden angreifende Exenterhebel (66) und die an ihren Mitten angelenkten Rückehalte-Federanordnungen (60) einstellbar ist.

8. Vorrichtung nach Anspruch 5, **dadurch gekennzeichnet,** daß in der Mitte der Welle (10) ein mit den Halteklinken (50) und den Hebeln (52) zusammen schwenkbarer Gelenkstab (80) angeordnet ist, der über weitere Hebel (81, 83) und gedämpft durch eine Federanordnung (84) mit einer Hebestange (8) für das Zündergehäuse (7) verbunden ist.

9. Vorrichtung nach einem oder mehreren der Ansprüche 1 bis 7, **dadurch gekennzeichnet,** daß beim Start des Flugkörpers (2) der T-Hänger (5) die Halteklinken (50) anhebt, wodurch die Rollen (54) auf den Kurvenbahnen (55a) der Gleithebel (55) gegen die Kraft der Rückhalte-Federanordnungen (60) bis zu einer gesicherten Stellung abrollen und über die He- bel (52), die Stäbe (73), Hebel (74) und Federpuffer (76) die Greifklinken (51) sowie über die Hebel (52), den Gelenkstab (80), die Hebel (81, 83) und die Hebestange (8) das Zündergehäuse (7) in gesicherte Stellungen angehoben sind.

10. Vorrichtung nach einem oder mehreren der Ansprüche 1 bis 9, **dadurch gekennzeichnet,** daß durch ein Vierkant (77) in der Welle (10) die Halteklinken (50) und Greifklinken (51) und durch ein Vierkant (86) in der Welle (82) das Zündergehäuse (7) in die Stellung der Rückhaltefunktion zurückdrehbar sind.

## Claims

1. Device for suspending, releasing and starting of missiles, having a housing (3) attached underneath an aircraft comprising a take-off rail (4) from where missiles (2) take off under their own thrust, **characterised in that** the release of the missile (2) onto the take-off rail (4) is achieved by way of two release bridges (6) the force of which is produced by knee-levers (11,12) which are held in position by two spring arrangements (16), that the spring arrangements are secured in their position by pawls (22) and that the release of the knee levers is effected by a reversing magnet (36) acting on the pawls, in which respect a detention function, which holds the missile in its position until take-off, is unlocked at the same time.

2. Device according to claim 1, **characterised in that** the spring arrangements (16) are connected on the one side with points of rotation (15) of the knee levers (11, 12) and on the other side hinged to single-armed levers (18), the bearing shafts (20̸) of which have external extensions (21) which engage the pawls (22).

3. Device according to claims 1 and 2, **characterised in that** the reversing magnet (36), whilst driving a push rod (37) over a point of rotation (29), simultaneously acts on two double-armed levers, of which the first lever (25) lifts the pawls (22) of the levers (18) by means of its other end via a shaft (24), causing the spring arrangements (16) to be untensioned, the knee levers (11, 12) to told and the release bridges (6) to be lifted off the missile (2), and the second lever (27) lifts a safety lever (33) of a shaft (35) by means of its other end via a fork (31) and a driver pin (32), thus releasing the detent function.

4. Device according to claim 3, **characterised in that** the detent function blocks the position of the missile (2) up to take-off by means of two detent pawls (50̸) and two grab pawls (51), which block a T-suspension (5) which is arranged at the top at the aircraft, from both sides, and that the detent function ensures orderly ignition of the missile engine by means of an ignition housing (7) having ignition contacts (9) which is lowered into the T-suspension (5).

5. Device according to claim 4, **characterised in that** the detent pawls (50̸) and the grab pawls (51) have a common point of rotation (10̸) with levers (52) which are provided with lateral rollers (54) which engage in curved paths (55a) of slide levers (55) on which they can roll off, and that the slide levers (55) are connected to retaining-spring arrangements (60̸) which for performing their retaining function press the grab pawls (51) via the T-suspension (5) against the detent pawls (50̸).

6. Device according to claims 4 and 5, **characterised in that** the grab pawls (51) are additionally connected from the top to a groove (49) of the T-suspension (51) by way of spring buffers (76), which are connected to the levers (52) via levers (74) and rods (73).

7. Device according to claims 4 and 5, **characterised in that** the retaining force of the grab pawls (51) is adjustable by way of single-arm levers (64), by eccentric levers (66) engaging at their lower ends and by retaining-spring arrangements (60̸) hinged at their centres.

8. Device according to claim 5, **characterised in that** a hinged rod (80̸), which is pivoted together with the detent pawls (50̸) and the levers (52), is arranged in the centre of the shaft (10̸) and connected via additional levers (81, 83), whilst dampened by a spring arrangement (84), to a lifting rod (8) for the inginition housing (7).

9. Device according to one or more of the claims 1 to 7, **characterised in that** the T-suspension (5) lifts the detent pawls (50̸) on take-off of the missile (2), causing the rollers (54) to roll off on the curved paths (55a) of the glide levers (55) against the force of the retaining-spring arrangements (60̸) into a secured position and to lift the grab pawls (51) via the levers (52), the rods (73), levers (74) and spring buffers (76), and the ignition housing (7) via the levers (52), the hinged rod (80̸), the levers (81, 83) and the lifting rod (8) into secured positions.

10. Device according to one or more of the claims 1 to 9, **characterised in that** the detent pawls (50̸) and the grab pawls (51) are rotatable back into the detent function by means of a rectangle (77) in the shaft (10̸), and the ignition housing (7) by means of a rectangle (86) in the shaft (82).

## Revendications

1. Dispositif de suspension, de blocage et de lancement d'engins volants, comprenant un boîtier (3) disposé sous un avion et comportant un rail de lancement (4), à partir duquel l'engin volant (2) est lancé par sa propre poussée, caractérisé par le fait que le blocage de l'engin volant (2) sur le rail de lancement (4) se fait avec deux étriers de blocage (6) dont la force est produite avec des leviers à genouillère (11, 12) maintenus dans leur position par deux agencements de ressort (16), que les agencements de ressort sont verrouillés dans leur position par des cliquets (22) et que le dégagement des leviers à genouillère se fait par un aimant réversible (36) agissant sur les cliquets, avec annulation simultanée d'une fonction de retenue qui maintient l'engin volant dans sa position jusqu'à son lancement.

2. Dispositif selon la revendication 1, caractérisé par le fait que les agencements de ressort (16) sont reliés d'un côté à des axes de rotation (15) des leviers à genouillère (11, 12) et sont articulés de l'autre côté avec des leviers (18) à bras unique, sur les axes d'articulation (20) desquels sont prévues des saillies (21) extérieures dans lesquelles s'encliquetent les cliquets (22).

3. Dispositif selon les revendication 1 et 2, caractérisé par le fait que lors de la sortie d'une tige (37) l'aimant réversible (36) agit, par l'intermédiaire d'un axe de rotation (29), en même temps sur deux leviers à deux bras, dont le premier levier (25) dégage avec son autre extrémité les cliquets (22) des leviers (18), par l'intermédiaire d'un axe (24), ce qui conduit les agencements de ressort (16) à se détendre, les leviers à genouillère (11, 12) à fléchir et les étriers de blocage (6) à se soulever de l'engin volant (2), et le deuxième levier (27) soulève avec son autre extrémité un levier de verrouillage (33) d'un axe (35), par l'intermédiaire d'une fourche (31) et d'une broche d'entraînement (32), libérant ainsi la fonction de retenue.

4. Dispositif selon la revendication 3, caractérisé par le fait que la fonction de retenue assure le verrouillage en position de l'engin volant (?), jusqu'à son lancement, par deux cliquets de maintien (50) et deux cliquets à griffe (51) qui bloquent de part et d'autre un support en T (5) disposé sur le haut de l'engin volant, et que la fonction de retenue garantit l'allumage correct du propulseur de l'engin volant, par un boîtier d'allumeur (7) abaissé dans le support en T (5) et muni de contacts d'allumage (9).

5. Dispositif selon la revendication 4, caractérisé par le fait que les cliquets de maintien (50) et les cliquets à griffe (51) ont un axe de rotation (10) commun avec des leviers (52) munis sur le côté de galets (54) qui s'engagent dans des pistes incurvées (55a) de leviers coulissants (55) et peuvent rouler'sur celles-ci, et que les leviers coulissants (55) sont reliés à des agencements de ressort de retenue (60) qui, pour assurer la fonction de retenue, pressent les cliquets à griffe (51) contre les cliquets de maintien (50), par l'intermédiaire du support en T (5).

6. Dispositif selon les revendications 4 et 5, caractérisé par le fait que les cliquets à griffe (51) sont poussés en plus d'en haut dans une rainure (49) du support en T (51), par des butées à ressort (76) qui sont reliées aux leviers (52) par des leviers (74) et des bielles (73).

7. Dispositif selon les revendications 4 et 5, caractérisé par le fait que la force de retenue des cliquets à griffe (51) est réglée par des leviers (64) à bras unique, des leviers à excentrique (66) en prise avec les extrémités inférieures des leviers et les agencements de ressort de retenue (60) articulés au milieu des leviers.

8. Dispositif selon la revendication 5, caractérisé par le fait qu'au milieu de l'axe (10) est disposée une bielle (80) qui est susceptible de pivoter conjointement avec les cliquets de maintien (50) et les leviers (52) et qui est reliée à une tige de relevage (8) pour le boîtier d'allumeur (7) par des leviers (81, 83) supplémentaires, avec amortissement par un agencement de ressort (84).

9. Dispositif selon l'une des revendications 1 à 7, caractérisé par le fait que lors du lancement de l'engin volant (2), le support en T (5) soulève les cliquets de maintien (50), ce qui amène les galets (54) à rouler sur les pistes incurvées (55a) des leviers coulissants (55), à l'encontre de la force des agencements de ressort de retenue (60), jusqu'à une position verrouillée, et, par l'intermédiaire des leviers (52), des bielles (73), des leviers (74) et des butées à ressort (80), les cliquets à griffe (51) sont soulevés jusqu'à une position verrouillée, et, par l'intermédiaire des leviers (52), de la bielle (80), des leviers (81, 83) et de la tige de levage (8), le boîtier d'allumeur (7) est soulevé jusqu'à une position verrouillée.

10. Dispositif selon une ou plusieurs des revendications 1 à 9, caractérisé par le fait qu'un dispositif à quatre pans (77) dans l'axe (10) et un dispositif à quatre pans (86) dans l'axe (82) permettent de ramener par rotation les cliquets de maintien (50) et les cliquets à griffe (51) ainsi que le boîtier d'allumeur (7) à la position de la fonction de retenue.
